# EUROPEAN PATENT SPECIFICATION

(11) **EP 1 348 274 B1**
(45) Date of publication and mention of the grant of the patent: **31.01.2007**
(21) Application number: 01985159.1
(22) Date of filing: 27.12.2001
(51) Int. Cl.: H04L 9/00

(54) **Local authentification in a communication system**
Lokale Authentifizierung in einem Kommunikationssystem
Authentification locale dans un système de communication

(30) Priority: 05.01.2001 US 755660
(43) Date of publication of application: 01.10.2003
(73) Proprietor: QUALCOMM INCORPORATED, San Diego, CA 92121-1714 (US)
(72) Inventor: QUICK, Roy, Franklin, Jr., San Diego, CA 92107 (US); ROSE, Gregory, G., Mortlake, NSW 2137 (AU)
(74) Representative: Walsh, Michael Joseph
(86) International application number: PCT/US2001/050643
(87) International publication number: WO 2002/054663

(56) References cited:
- "Rouges MS_Shell Treat Analysis" 3GPP TSG SA WG3 SECURITY, [Online] 28 - 30 November 2000, pages 1-17, XP002210348 Sophia Antipolis, France Retrieved from the Internet: <URL:http://www.3gpp.org/ftp/tsg_sa/WG3_Se curity/2000_meetings/TSGS3_16_Sophia_Antip olis/Docs/PDF/S3-000711.pdf> [retrieved on 2002-08-20]
- ALBERT LEVI, M. UFUK CAGLAYAN: "A Multiple Signature Based Certificate Verification Scheme" BOGAZICI UNIVERSITY, [Online] XP002210349 Istanbul Retrieved from the Internet: <URL:http://citeseer.nj.nec.com/cache/pape rs/cs/2506/http:zSzzSzmercan.cmpe.boun.edu .trzSz~levizSzbas98.pdf/a-multiple-signatu re-based.pdf> [retrieved on 2002-08-20]
- "Incorporating UIM into 3G and IMT-2000 Systems" TIA/EIA/IS-808, [Online] - November 2000 (2000-11) XP002210350 Retrieved from the Internet: <URL:http://www.tiaonline.org/standards/sf g/imt2k/cdma2000/TIA-EIA-IS-808.pdf> [retrieved on 2002-08-20]
- MEHROTRA A ET AL: "MOBILITY AND SECURITY MANAGEMENT IN THE GSM SYSTEM AND SOME PROPOSED FUTURE IMPROVEMENTS" PROCEEDINGS OF THE IEEE, IEEE. NEW YORK, US, vol. 86, no. 7, July 1998 (1998-07), pages 1480-1497, XP000854168 ISSN: 0018-9219

## Description

### BACKGROUND

### I. Field of the Invention

The present invention relates to communication systems, more particularly, to local authentication of a communication system subscriber.

### II. Background

The field of wireless communications has many applications including, e.g., cordless telephones, paging, wireless local loops, personal digital assistants (PDAs), Internet telephony, and satellite communication systems. A particularly important application is cellular telephone systems for mobile subscribers. (As used herein, the term "cellular" systems encompasses both cellular and personal communications services (PCS) frequencies.) Various over-the-air interfaces have been developed for such cellular telephone systems including, e.g., frequency division multiple access (FDMA), time division multiple access (TDMA), and code division multiple access (CDMA). In connection therewith, various domestic and international standards have been established including, e.g., Advanced Mobile Phone Service (AMPS), Global System for Mobile (GSM), and Interim Standard 95 (IS-95). In particular, IS-95 and its derivatives, IS-95A, IS-95B, ANSI J-STD-008 (often referred to collectively herein as IS-95), and proposed high-data-rate systems for data, etc. are promulgated by the Telecommunication Industry Association (TIA) and other well known standards bodies.

Cellular telephone systems configured in accordance with the use of the IS-95 standard employ CDMA signal processing techniques to provide highly efficient and robust cellular telephone service. Exemplary cellular telephone systems configured substantially in accordance with the use of the IS-95 standard are described in U.S. Patent Nos. 5,103,459 and 4,901,307, which are assigned to the assignee of the present invention. An exemplary described system utilizing CDMA techniques is the cdma2000 ITU-R Radio Transmission Technology (RTT) Candidate Submission (referred to herein as cdma2000), issued by the TIA. The standard for cdma2000 is given in draft versions of IS-2000 and has been approved by the TIA. The cdma2000 proposal is compatible with IS-95 systems in many ways. Another CDMA standard is the W-CDMA standard, as embodied in 3^{rd} Generation Partnership Project "3GPP", Document Nos. 3G TS 25.211, 3G TS 25.212, 3G TS 25.213, and 3G TS 25.214.

Given the ubiquitous proliferation of telecommunications services in most parts of the world and the increased mobility of the general populace, it is desirable to provide communication services to a subscriber while he or she is travelling outside the range of the subscriber's home system. One method of satisfying this need is the use of an identification token, such as the Subscriber Identity Module (SIM) in GSM systems, wherein a subscriber is assigned a SIM card that can be inserted into a GSM phone. The SIM card carries information that is used to identify the billing information of the party inserting the SIM card into a mobile phone. Next generation SIM cards have been renamed as USIM (UTMS SIM) cards. In a CDMA system, the identification token is referred to as a Removable User Interface Module (R-UIM) and accomplishes the same purpose. Use of such an identification token allows a subscriber to travel without his or her personal mobile phone, which may be configured to operated on frequencies that are not used in the visited environment, and to use a locally available mobile phone without incurring costs in establishing a new account.

Although convenient, the use of such identification tokens to access account information of a subscriber can be insecure. Currently, such identification tokens are programmed to transmit private information, such as a cryptographic key used for message encryption or an authentication key for identifying the subscriber, to the mobile phone. A person contemplating the theft of account information can accomplish his or her goal by programming a mobile phone to retain private information after the identification token has been removed, or to transmit the private information to another storage unit during the legitimate use of the mobile phone. Mobile phones that have been tampered in this manner will hereafter be referred to as "rogue shells." Hence, there is a current need to preserve the security of the private information stored on an identification token while still facilitating the use of said private information to access communication services.

A published document by Lucent Technologies entitled "Rouges MS_Shell Treat Analysis" published November 2000, XP002210348 Sophia Antipolis, France, proposes a mobile phone architecture which attempts to stop fraudulent network access by a rogue shell in a telecommunications mobile telephone network. This document identifies a method to minimise a serious fraud problem which occurs where units are used fraudulently in mobile telephone networks.

### Summary

A novel method and a subscriber identification module as set out in the appended claims, for providing secure authentication to a subscriber roaming outside his or her home system is presented.

### Detailed Description of the Drawings

FIG. 1 is a diagram of an exemplary data communication system.
FIG. 2 is a diagram of a communication exchange between components in a wireless communication system.
FIG. 3 is a diagram of an embodiment wherein a subscriber identification token provides encryption support to a mobile unit.

### Detailed Description of the Embodiments

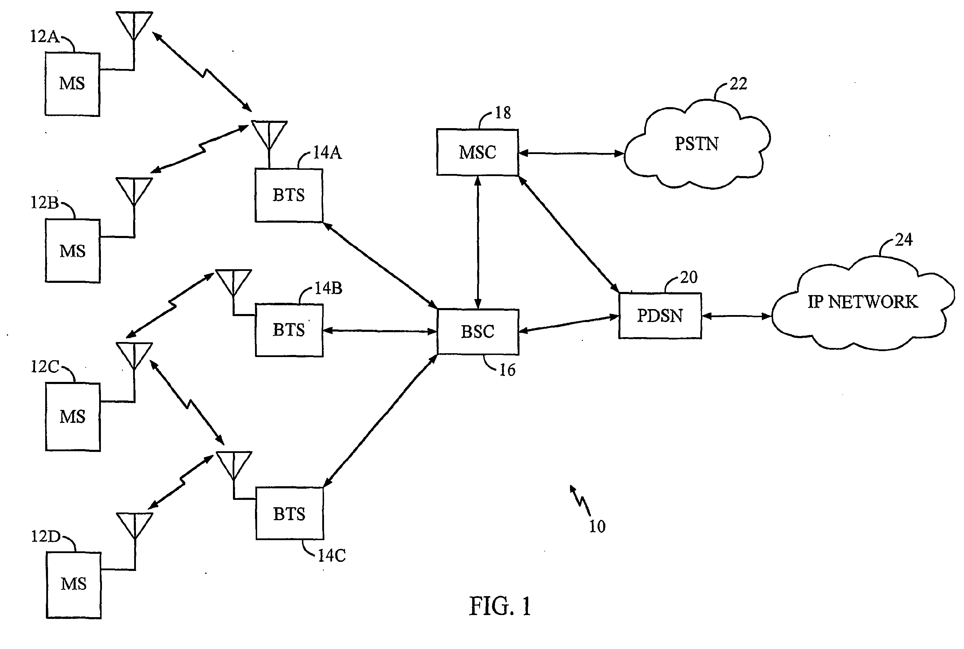

As illustrated in FIG. 1, a wireless communication network 10 generally includes a plurality of mobile stations (also called subscriber units or user equipment) 12a-12d, a plurality of base stations (also called base station transceivers (BTSs) or Node B) 14a-14c, a base station controller (BSC) (also called radio network controller or packet control function 16), a mobile switching center (MSC) or switch 18, a packet data serving node (PDSN) or internetworking function (IWF) 20, a public switched telephone network (PSTN) 22 (typically a telephone company), and an Internet Protocol (IP) network 24 (typically the Internet). For purposes of simplicity, four mobile stations 12a-12d, three base stations 14a-14c, one BSC 16, one MSC 18, and one PDSN 20 are shown. It would be understood by those skilled in the art that there could be any number of mobile stations 12, base stations 14, BSCs 16, MSCs 18, and PDSNs 20.

In one embodiment the wireless communication network 10 is a packet data services network. The mobile stations 12a-12d may be any of a number of different types of wireless communication device such as a portable phone, a cellular telephone that is connected to a laptop computer running IP-based, Web-browser applications, a cellular telephone with associated hands-free car kits, a personal data assistant (PDA) running IP-based, Web-browser applications, a wireless communication module incorporated into a portable computer, or a fixed location communication module such as might be found in a wireless local loop or meter reading system. In the most general embodiment, mobile stations may be any type of communication unit.

The mobile stations 12a-12d may be configured to perform one or more wireless packet data protocols such as described in, for example, the EIA/TIA/IS-707 standard. In a particular embodiment, the mobile stations 12a-12d generate IP packets destined for the IP network 24 and encapsulate the IP packets into frames using a point-to-point protocol (PPP).

In one embodiment the IP network 24 is coupled to the PDSN 20, the PDSN 20 is coupled to the MSC 18, the MSC 18 is coupled to the BSC 16 and the PSTN 22, and the BSC 16 is coupled to the base stations 14a-14c via wirelines configured for transmission of voice and/or data packets in accordance with any of several known protocols including, e.g., E1, T1, Asynchronous Transfer Mode (ATM), IP, Frame Relay, HDSL, ADSL, or xDSL. In an alternate embodiment, the BSC 16 is coupled directly to the PDSN 20, and the MSC 18 is not coupled to the PDSN 20. In another embodiment of the invention, the mobile stations 12a-12d communicate with the base stations 14a-14c over an RF interface defined in the 3^{rd} Generation Partnership Project 2 "3GPP2", "Physical Layer Standard for cdma2000 Spread Spectrum Systems," 3GPP2 Document No. C.P0002-A, TIA PN-4694, to be published as TIA/EIA/IS-2000-2-A, (Draft, edit version 30) (Nov. 19, 1999).

During typical operation of the wireless communication network 10, the base stations 14a-14c receive and demodulate sets of reverse-link signals from various mobile stations 12a-12d engaged in telephone calls, Web browsing, or other data communications. Each reverse-link signal received by a given base station 14a-14c is processed within that base station 14a-14c. Each base station 14a-14c may communicate with a plurality of mobile stations 12a-12d by modulating and transmitting sets of forward-link signals to the mobile stations 12a-12d. For example, as shown in FIG. 1, the base station 14a communicates with first and second mobile stations 12a, 12b simultaneously, and the base station 14c communicates with third and fourth mobile stations 12c, 12d simultaneously. The resulting packets are forwarded to the BSC 16, which provides call resource allocation and mobility management functionality including the orchestration of soft handoffs of a call for a particular mobile station 12a-12d from one base station 14a-14c to another base station 14a-14c. For example, a mobile station 12c is communicating with two base stations 14b, 14c simultaneously. Eventually, when the mobile station 12c moves far enough away from one of the base stations 14c, the call will be handed off to the other base station 14b.

If the transmission is a conventional telephone call, the BSC 16 will route the received data to the MSC 18, which provides additional routing services for interface with the PSTN 22. If the transmission is a packet-based transmission such as a data call destined for the IP network 24, the MSC 18 will route the data packets to the PDSN 20, which will send the packets to the IP network 24. Alternatively, the BSC 16 will route the packets directly to the PDSN 20, which sends the packets to the IP network 24.

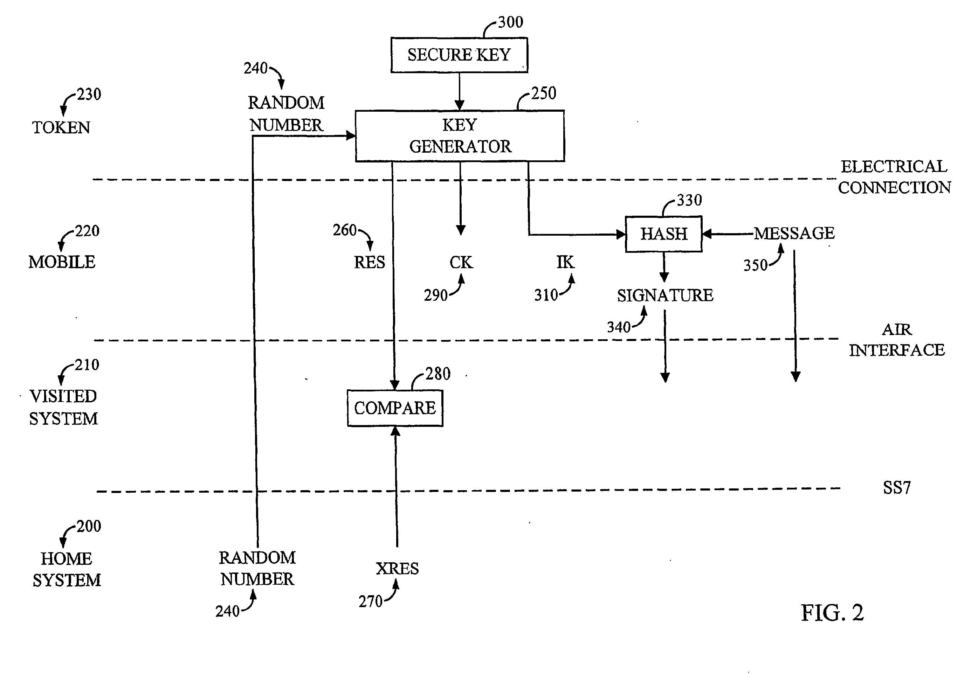

FIG. 2 illustrates a method for authenticating a subscriber using a mobile phone in a wireless communication system. A subscriber travelling outside of the range of his or her Home System (HS) 200 uses a mobile unit 220 in a Visited System (VS) 210. The subscriber uses the mobile unit 220 by inserting a subscriber identification token. Such a subscriber identification token is configured to generate cryptographic and authentication information that allows a subscriber to access account services without the need for establishing a new account with the visited system. A request is sent from the mobile unit 220 to the VS 210 for service (not shown in figure). VS 210 contacts HS 200 to determine service to the subscriber (not shown in figure).

HS 200 generates a random number 240 and an expected response (XRES) 270 based on knowledge of the private information held on the subscriber identification token. The random number 240 is to be used as a challenge, wherein the targeted recipient uses the random number 240 and private knowledge to generate a confirmation response that matches the expected response 270. The random number 240 and the XRES 270 are transmitted from the HS 200 to the VS 210. Other information is also transmitted, but is not relevant herein (not shown in figure). Communication between the HS 200 and the VS 210 is facilitated in the manner described in Fig. 1. The VS 210 transmits the random number 240 to the mobile unit 220 and awaits the transmission of a confirmation message 260 from the mobile unit 220. The confirmation message 260 and the XRES 270 are compared at a compare element 280 at the VS 210. If the confirmation message 260 and XRES 270 match, the VS 210 proceeds to provide service to the mobile unit 220.

Mobile unit 220 sends the random number 240 to the subscriber identification token 230 that has been inserted inside the mobile unit 220 by the subscriber. A Secure Key 300 is stored on the subscriber identification token 230. Both the Secure Key 300 and the random number 240 are used by a key generator 250 to generate the confirmation message 260, a cryptographic Cipher Key (CK) 290, and an Integrity Key (IK) 310. The CK 290 and IK 310 are conveyed to the mobile unit 220.

At the mobile unit 220, the CK 290 can be used to encrypt communications between the mobile unit 220 and the VS 210, so that communications can be decrypted only by the intended recipient of the message. Techniques for using a cryptographic key to encrypt communications are described in co-pending U.S. Patent Application 09/143,441, filed on August 28, 1998, entitled, "Method and Apparatus for Generating Encryption Stream Ciphers," assigned to the assignee of the present invention, and incorporated by reference herein. It should be noted that other encryption techniques can be used without affecting the scope of the embodiments described herein.

The IK 310 can be used to generate a message authentication code (MAC), wherein the MAC is appended to a transmission message frame in order to verify that the transmission message frame originated from a particular party and to verify that the message was not altered during transmission. Techniques for generating MACs are described in co-pending U.S. Patent Application No. 09/371,147, filed on August 9, 1999, entitled, "Method and Apparatus for Generating a Message Authentication Code," assigned to the assignee of the present invention and incorporated by reference herein. It should be noted that other techniques for generating authentication codes may be used without affecting the scope of the embodiments described herein.

Alternatively, the IK 310 can be used to generate an authentication signature 340 based on particular information that is transmitted separately or with the transmission message. Techniques for generating an authentication signature are described in U.S. Patent 5,943,615, entitled, "Method and Apparatus for Providing Authentication Security in a Wireless Communication System," assigned to the assignee of the present invention and incorporated by reference herein. The authentication signature 340 is the output of a hashing element 330 that combines the IK 310 with a message 350 from the mobile unit 220. The authentication signature 340 and the message 350 are transmitted over the air to the VS 210.

As seen in FIG. 2, the cryptographic key 290 and the integrity key 310 are transmitted from the subscriber identification token 230 to the mobile unit 220, which proceeds to generate data frames for public dissemination over the air. While this technique may prevent an eavesdropper from determining the values of such keys over the air, this technique does not provide protection from attack by a rogue shell. A rogue shell can be programmed to accept the CK 290 and the IK 310, and to then store the keys rather than purging the presence of such keys from local memory. Another method to steal keys is to program the mobile unit 220 to transmit received keys to another location. The CK 290 and the IK 310 can then be used to fraudulently bill unauthorized communications to the subscriber. This rogue shell attack is particularly effective in systems wherein the random number generated at the Home System 200 is used in a manner that is insecure, such as the case when the same generated keys are used for an extended period of time.

An embodiment that protects against a rogue shell attack uses the processors and memory in the subscriber identification token to generate an electronic signature that cannot be reproduced by a mobile unit without the insertion of the subscriber identification token.

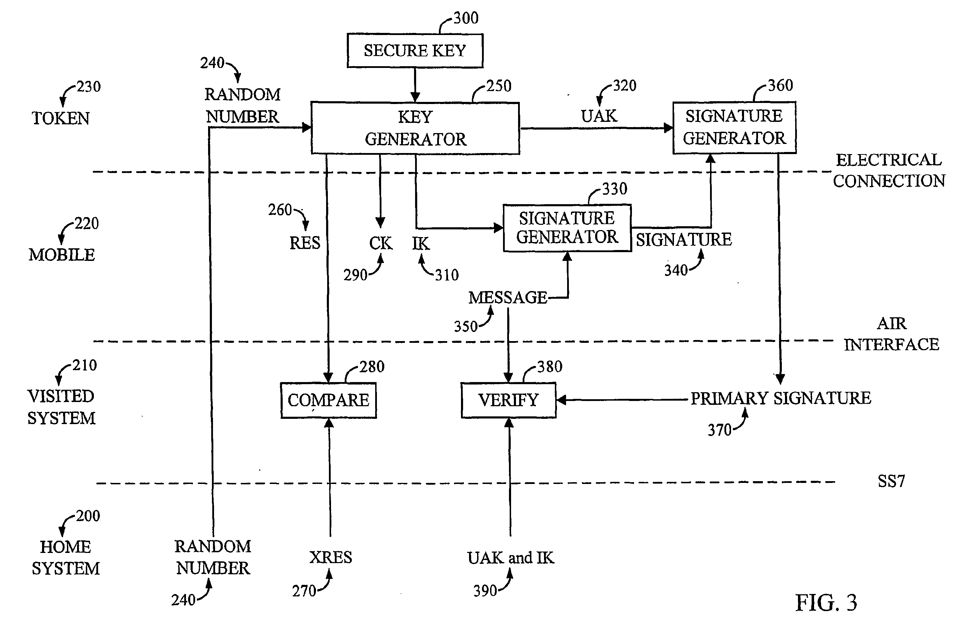

FIG. 3 illustrates an embodiment for performing local authentication of a subscriber in a wireless communication system. In this embodiment, the subscriber identification token 230 is programmed to generate an authentication response based on a key that is not passed to the mobile unit 220. Hence, if the mobile unit used by a subscriber is a rogue shell, the rogue shell cannot recreate the appropriate authentication responses.

Similar to the method described in FIG. 2, the mobile unit 220 generates a signature signal based upon an IK 310 that is received from the subscriber identification token 230 and a message that is to be sent to the VS 210. However, in the exemplary embodiment, the signature signal is not passed to the VS. The signature signal is passed to the subscriber identification token 230, and is used along with an additional key to generate a primary signature signal. The primary signature signal is sent out to the mobile unit 220, which in turn transmits the primary signature signal to the VS 210 for authentication purposes.

HS 200 generates a random number 240 and an expected response (XRES) 270 based on knowledge of the private information held on the subscriber identification token 230. The random number 240 and the XRES 270 are transmitted to the VS 210. Communication between the HS 200 and the VS 210 is facilitated in the manner described in Fig. 1. The VS 210 transmits the random number 240 to the mobile unit 220 and awaits the transmission of a confirmation message 260 from the mobile unit 220. The confirmation message 260 and the XRES 270 are compared at a compare element 280 at the VS 210. If the confirmation message 260 and the XRES 270 match, the VS 210 proceeds to provide service to the mobile unit 220.

Mobile unit 220 conveys the random number 240 to the subscriber identification token 230 that has been electronically coupled with the mobile unit 220 by the subscriber. A Secure Key 300 is stored on the subscriber identification token 230. Both the Secure Key 300 and the random number 240 are used by a key generator 250 to generate the confirmation message 260, a Cryptographic Key (CK) 290, an Integrity Key (IK) 310, and a UIM Authentication Key (UAK) 320. The CK 290 and IK 310 are conveyed to the mobile unit 220.

At the mobile unit 220, the CK 290 is used for encrypting transmission data frames (not shown in FIG. 3). The IK 310 is used to generate a signature signal 340. The signature signal 340 is the output of a signature generator 330 that uses an encryption operation or a one-way operation, such as a hashing function, upon the IK 310 and a message 350 from the mobile unit 220. The signature signal 340 is transmitted to the subscriber identification token 230. At the subscriber identification token 230, the signature signal 340 and the UAK 320 are manipulated by a signature generator 360 to generate a primary signature signal 370. The primary signature signal 370 is transmitted to the mobile unit 220 and to the VS 210, where a verification element 380 authenticates the identity of the subscriber. The verification element 380 can accomplish the verification by regenerating the signature signal 340 and the primary signature signal 370. Alternatively, the verification element 380 can receive the signature signal 340 from the mobile unit 220 and only regenerate the primary signature signal 370.

The regeneration of the signature signal 340 and the primary signature signal 370 at the VS 210 can be accomplished by a variety of techniques. In one embodiment, the verification element 380 can receive a UAK 390 and an integrity key from the Home System 200. When the verification element 380 also receives the message 350 from the mobile unit 220, the signature signal can be generated and then used to generate the primary signature element.

The signature generator 360 within the subscriber identification token 230 can comprise a memory and a processor, wherein the processor can be configured to manipulate inputs using a variety of techniques. These techniques can take the form of encryption techniques, hashing functions, or any nonreversible operation. As an example, one technique that can be implemented by the subscriber identification token is the Secure Hash Algorithm (SHA), promulgated in Federal Information Processing Standard (FIPS) PUB 186, "Digital Signature Standard," May 1994. Another technique that can be performed by the subscriber identification token is the Data Encryption Standard (DES), promulgated in FIPS PUB 46, January 1977. The use of the term "encryption" as used herein does not necessarily imply that operations must be reversible. The operations may be non-reversible in the embodiments described herein.

The key generator 250 can also comprise a memory and a processor. Indeed, in one embodiment, a single processor can be configured to accomplish the functions of the signature generator 360 and the key generator 250. Verification can be performed by calculating the same result from the same inputs at the verification element 380, and comparing the calculated and transmitted values.

A subscriber identification token used in a CDMA system or a GSM system, also known as an R-UIM or a USIM, respectively, can be configured to generate the primary signature signal 370 in the manner described above, i.e., all messages generated by the mobile unit are encrypted and authenticated. However, since the central processing unit in such tokens can be limited, it may be desirable to implement an alternative embodiment, wherein a weight of importance is assigned to a message frame so that only important messages are securely encrypted and authenticated. For example, a message frame containing billing information has more need for increased security than a message frame containing a voice payload. Hence, the mobile unit can assign a greater weight of importance to the billing information message frame and a lesser weight of importance to the voice message frame. When the subscriber identification token receives the signature signals generated from these weighted messages, the CPU can assess the different weights of importance attached to each signature signal and determine a primary signature signal for only the heavily weighted signature signals. Alternatively, the mobile unit can be programmed to convey only the "important" signature signals to the subscriber identification token. This method of selective primary signature signal generation increases the efficiency of the subscriber identification token by lightening the processing load of the subscriber identification token.

The embodiments described above prevent unauthorized use of a subscriber's account by requiring a more secure transaction between the subscriber identification token and the mobile unit. Since the mobile unit cannot generate a primary signature signal without knowledge of the secret UAK, the mobile unit that is programmed to act as a rogue shell cannot misappropriate subscriber information for wrongful purposes.

The embodiments described above also maximize the processing capability of the subscriber identification token by operating on a signature signal, rather than a message. Typically, a signature signal will have a shorter bit length than a message. Hence, less time is required for the signature generator in the subscriber identification to operate on a signature signal rather than a transmission message frame. As mentioned above, the processing capability of the subscriber identification token is usually much less than the processing capability of the mobile unit. Hence the implementation of this embodiment would provide secure authentication of messages without sacrificing speed.

However, it should be noted that improvements in processor architectures occur at an almost exponential pace. Such improvements consist of faster processing times and smaller processor sizes. Hence, another embodiment for providing local authentication can be implemented wherein the primary signature signal can be generated directly from a message, rather than indirectly through a short signature signal. A mobile unit can be configured to pass a message directly to the subscriber identification token, one with the capability to generate a primary signature signal quickly, rather than passing the message to a signature generating element within the mobile unit. In another embodiment, only a limited number of messages need be passed directly to the subscriber identification token, in accordance with the degree of security needed for said messages.

It should be noted that while the various embodiments have been described in the context of a wireless communication system, the various embodiments can be further used to provide secure local authentication of any party using an unfamiliar terminal connected in a communications network.

Thus, novel and improved methods and apparatus for performing local authentication of a subscriber in a communication system have been described. Those of skill in the art would understand that the various illustrative logical blocks, modules, circuits, and algorithm steps described in connection with the embodiments disclosed herein may be implemented as electronic hardware, software, firmware, or combinations thereof. The various illustrative components, blocks, modules, circuits, and steps have been described generally in terms of their functionality. Whether the functionality is implemented as hardware, software, or firmware depends upon the particular application and design constraints imposed on the overall system. Skilled artisans recognize the interchangeability of hardware, software, and firmware under these circumstances, and how best to implement the described functionality for each particular application.

Implementation of various illustrative logical blocks, modules, circuits, and algorithm steps described in connection with the embodiments disclosed herein may be implemented or performed with a digital signal processor (DSP), an application specific integrated circuit (ASIC), a field programmable gate array (FPGA) or other programmable logic device, discrete gate or transistor logic, discrete hardware components. A processor executing a set of firmware instructions, any conventional programmable software module and a processor, or any combination thereof can be designed to perform the functions described herein. The processor may advantageously be a microprocessor, but in the alternative, the processor may be any conventional processor, controller, microcontroller, or state machine. The software module could reside in RAM memory, flash memory, ROM memory, EPROM memory, EEPROM memory, registers, hard disk, a removable disk, a CD-ROM, or any other form of storage medium known in the art. An exemplary processor is coupled to the storage medium so as to read information from, and write information to, the storage medium. In the alternative, the storage medium may reside in an ASIC. The ASIC may reside in a telephone or other user terminal. In the alternative, the processor and the storage medium may reside in a telephone or other user terminal. The processor may be implemented as a combination of a DSP and a microprocessor, or as two microprocessors in conjunction with a DSP core, etc. Those of skill would further appreciate that the data, instructions, commands, information, signals, bits, symbols, and chips that may be referenced throughout the above description are represented by voltages, currents, electromagnetic waves, magnetic fields or particles, optical fields or particles, or any combination thereof.

Various embodiments of the present invention have thus been shown and described. It would be apparent to one of ordinary skill in the art, however, that numerous alterations may be made to the embodiments herein disclosed without departing from the scope of the invention.

## Claims

1. A subscriber identification module (230) for providing local authentication of a subscriber in a communication system (210) comprising:
a memory; and
**characterised by** comprising
at least one processing element configured to implement a set of instructions stored in the memory, the set of instructions for:
generating a plurality of keys (290, 310, 320) in response to a received challenge (240)
generating an authentication signal (370) based on a received signal (340) and a first key (320) from the plurality of keys, wherein the received signal (340) is transmitted from a communications unit (220) communicatively coupled of the subscriber identification module (230), and the received signal (340) is generated by the communications unit (220) using a second key (310) from the plurality of keys, the second key (310) having been communicated from the subscriber identification module (230) to the communications unit (220); and
transmitting the authentication signal (370) to the communications system (210) via the communications unit (220).

2. The subscriber identification module (230) of Claim 1, wherein the authentication signal (370) is generated by a hash function (330), optionally the Secure Hash Algorithm, SHA-1, or by an encryption algorithm, optionally the Data Encryption Standard, DES.

3. The subscriber identification module (230) of Claims 1 or 2, wherein said first key (320) is a secret key, said received signal (340) is an authorization message, said second key (310) is a communication key, and said authentication signal (370) is a signature, and wherein said at least one processing element comprises:
a key generation element (250); and
a signature generator (360) configured to receive said secret key (320) from the key generation element (250) and the authorization message (340) from the communications unit, and further configured to output said signature (370) to the communications unit.

4. The subscriber identification module (230) of Claim 3, wherein the key generation element (250) is configured to perform a cryptographic transformation upon an input value to produce a plurality of temporary keys.

5. The subscriber identification module (230) of Claim 4, wherein the cryptographic transformation is performed using a permanent key.

6. The subscriber identification module (230) of Claim 3, wherein the signature generator (360) is configured to
perform a cryptographic transformation upon the authorization message (340) from the communications unit (220) by using the secret key (320), wherein the signature (370) results from the cryptographic transformation.

7. The subscriber identification module (230) of Claim 3 wherein the key generator (250) is configured to generate the plurality of keys from a received value and a secret value, wherein at least one communication key (310) from the plurality of keys is delivered to the communications unit (220) and at least one secret key (320) from the plurality of keys is not delivered to the communications unit; and
the signature generator (360) is configured to generate the authorization signal (370) from both the at least one secret key (320) and from the authorization message (340), wherein the authorization message (340) is generated by the communications unit (220) using the at least one communication key (310).

8. The subscriber identification module (230) of Claim 7, wherein the subscriber identification module (230) is configured to be inserted into a communications unit (220).

9. The subscriber identification module (230) of Claim 7, wherein the signature generator (360) is configured to generate the authorization signal by using a hash function, optionally the Secure Hash Algorithm, SHA-1, or by using the Data Encryption Standard, DES.

10. The subscriber identification module (230) of Claim 7, wherein the at least one communication key comprises an integrity key (310).

11. A method for providing authentication of a subscriber using a subscriber identification module (230), **characterised by** the steps of:
generating in the subscriber identification module (230) a plurality of keys (290, 310,320);
generating in the subscriber identification module (230) an authentication signal (370) based on a received signal (340) and a first key (320) from the plurality of keys, wherein the received signal (340) is transmitted from a communications unit (220) communicatively coupled to the subscriber identification module (230), and the received signal is generated by the communications unit (220) using a second key (310) from the plurality of keys, the second key (310) having been communicated from the subscriber identification module (230) to the communications unit (220); and
transmitting the authentication signal (370) to a communications system (210) via the communications unit (220).

12. The method of Claim 11, wherein the generating of the signature signal is performed using a nonreversible operation, or by using the Data Encryption Standard, DES, or by using a hash function, optionally the Secure Hash Algorithm SHA-1.

13. The method of Claims 11 or 12 comprising:
transmitting at least one key (310) from the plurality of keys to a communications unit (220) communicatively coupled to the subscriber identification module (230) and holding private at least one key (320) from the plurality of keys;
assigning a weight to a transmission message (350) at the communications unit in accordance with a relative importance of the transmission message;
generating a signature (340) at the communications unit (220) using both the at least one key (310) transmitted to the communications unit (220) and the transmission message;
transmitting the signature (340) to a communications system (210) if the assigned weight to the transmission message (350) indicates that the transmission message is unimportant; and
transmitting the signature (340) to the subscriber identification module (230) if the assigned weight to the transmission message indicates that the transmission message is important, whereupon the subscriber identification module (230) generates said authentication signal (370) from the received signature signal (340), and then conveys said authentication signal (370) to a communications system (210).

## Patentansprüche

1. Ein Teilnehmeridentifikationsmodul (230) zum Vorsehen von Lokalauthentifizierung eines Teilnehmers in einem Kommunikationssystem (210), wobei das Teilnehmeridentifikationsmodul (230) Folgendes aufweist:
Einen Speicher; und **dadurch gekennzeichnet, dass** es weiterhin Folgendes aufweist:
Aufweisen von wenigstens einem Verarbeitungselement, konfiguriert, um einen Satz von Instruktionen, die in dem Speicher gespeichert sind, zu implementieren, wobei der Satz von Instruktionen für Folgendes ist:
Zum Erzeugen einer Vielzahl von Schlüsseln (290, 310, 320) ansprechend auf eine empfangene Anregung bzw. challenge (240); Erzeugen eines Authentifizierungssignals (370) basierend auf einem empfangenen Signal (340) und einen ersten Schlüssel (320) aus der Vielzahl von Schlüsseln, wobei das empfangene Signal (340) von einer Kommunikationseinheit (220), das kommunikativ an das Teilnehmeridentifikationsmodul (230) gekoppelt ist, gesendet wird, und das empfangene Signal (340) durch die Kommunikationseinheit (220) unter Verwendung eines zweiten Schlüssels (310) aus der Vielzahl von Schlüsseln erzeugt wird, wobei der zweite Schlüssel (310) von dem Teilnehmeridentifikationsmodul (230) der Kommunikationseinheit (220) mitgeteilt wurde; und
Senden des Authentifizierungssignals (370) zu dem Kommunikationssystem (210) über die Kommunikationseinheit (220).

2. Teilnehmeridentifikationsmodul (230) nach Anspruch 1, wobei das Authentifizierungssignal (370) von einer Hash-Funktion (330), optional die Secure Hash Algorithm, SHA-1 erzeugt wird, oder durch einen Verschlüsselungsalgorithmus, optional der Data Encryption Standard DES erzeugt wird.

3. Teilnehmeridentifikationsmodul (230) nach den Ansprüchen 1 oder 2, wobei der erste Schlüssel (320) ein geheimer Schlüssel ist, wobei das empfangene Signal (340) eine Authorisierungsnachricht ist, wobei der zweite Schlüssel (310) ein Kommunikationsschlüssel ist, und wobei das Authentifizierungssignal (370) eine Signatur ist, und wobei das wenigstens eine Verarbeitungselement Folgendes aufweist:
ein Schlüsselerzeugungselement (250); und
einen Signaturgenerator (360), konfiguriert, um den geheimen Schlüssel (320) von dem Schlüsselerzeugungselement (250) und die Authorisierungsnachricht (340) von der Kommunikationseinheit zu empfangen und weiterhin konfiguriert, um die Signatur (370) an die Kommunikationseinheit auszugeben.

4. Teilnehmeridentifikationsmodul (230) nach Anspruch 3, wobei das Schlüsselerzeugungselement (250) konfiguriert ist, um eine kryptografische Transformation auf einen Eingabewert durchzuführen, um eine Vielzahl von temporären Schlüsseln zu produzieren.

5. Teilnehmeridentifikationsmodul (230) nach Anspruch 4, wobei die kryptografische Transformation unter Verwendung eines permanenten Schlüssels durchgeführt wird.

6. Teilnehmeridentifikationsmodul (230) nach Anspruch 3, wobei der Signaturgenerator (360) konfiguriert ist, um eine kryptografische Transformation auf die Authorisierungsnachricht (340) von der Kommunikationseinheit (220) unter Verwendung des geheimen Schlüssels (320) durchzuführen, wobei die Signatur (370) aus der kryptografischen Transformation resultiert.

7. Teilnehmeridentifikationsmodul (230) nach Anspruch 3, wobei der Schlüsselgenerator (250) konfiguriert ist, um die Vielzahl von
Schlüsseln von einem empfangenen Wert und einem geheimen Wert zu erzeugen, wobei wenigstens ein Kommunikationsschlüssel (310) von der Vielzahl der Schlüssel zur Kommunikationseinheit (220) geliefert wird, und wenigstens ein geheimer Schlüssel (320) der Vielzahl von Schlüsseln nicht zu der Kommunikationseinheit geliefert wird; und
der Signaturgenerator (360) konfiguriert ist, um das Authorisierungssignal (370) von sowohl dem wenigstens einen geheimen Schlüssel (320) als auch von der Authorisierungsnachricht (340) erzeugt wird, wobei die Authorisierungsnachricht (340) von der Kommunikationseinheit (220) unter Verwendung des wenigstens einen Kommunikationsschlüssels (310) erzeugt wird.

8. Teilnehmeridentifikationsmodul (230) nach Anspruch 7, wobei das Teilnehmeridentifikationsmodul (230) konfiguriert ist, um in eine Kommunikationseinheit (220) eingefügt zu werden.

9. Teilnehmeridentifikationsmodul (230) nach Anspruch 7, wobei der Signaturgenerator (360) konfiguriert ist, um das Authorisierungssignal unter Verwendung einer Hash-Funktion optional dem Secure Hash Algorithm SHA-1, oder unter Verwendung des Data Encryption Standards DES erzeugt wird.

10. Teilnehmeridentifikationsmodul (230) nach Anspruch 7, wobei der wenigstens eine Kommunikationsschlüssel einen Integritätsschlüssel (310) aufweist.

11. Ein Verfahren zum Vorsehen von Authentifizierung eines Teilnehmers unter Verwendung eines Teilnehmeridentifikationsmoduls (230), **gekennzeichnet durch** die folgenden Schritte:
Erzeugen in dem Teilnehmeridentifikationsmodul (230) einer Vielzahl von Schlüsseln (290, 310, 320);
Erzeugen in dem Teilnehmeridentifikationsmodul (230) eines Authentifizierungssignals (370) basierend auf einem empfangenen Signal (340) und einen ersten Schlüssel (320) aus der Vielzahl von Schlüsseln, wobei das empfangene Signal (340) von einer Kommunikationseinheit (220), die kommunikativ an das Teilnehmeridentifikationsmodul (230) gekoppelt ist, gesendet wird, und das empfangene Signal von der Kommunikationseinheit (220) unter Verwendung eines zweiten Schlüssels (310) aus der Vielzahl von Schlüsseln erzeugt wird, wobei der zweite Schlüssel (310) von dem Teilnehmeridentifikationsmodul (230) zu der Kommunikationseinheit (220) kommuniziert wurde; und Senden des Authentifizierungssignals (370) zu einem Kommunikationssystem (210) über die Kommunikationseinheit (220).

12. Verfahren nach Anspruch 11, wobei das Erzeugen des Signatursignals unter Verwendung einer nicht umkehrbaren Operation oder unter Verwendung des Data Encryption Standards DES oder unter Verwendung einer Hash-Funktion, optional der Secure Hash Algorithm SHA-1 durchgeführt wird.

13. Verfahren nach den Ansprüchen 11 oder 12, das das Folgende aufweist:
Senden wenigstens eines Schlüssels (310) aus der Vielzahl von Schlüsseln zu einer Kommunikationseinheit (220), die kommunikativ zu dem Teilnehmeridentifikationsmodul (230) gekoppelt ist, und das Privat- bzw. Geheimhalten wenigstens eines Schlüssels (320) von der Vielzahl von Schlüsseln;
Zuweisen einer Gewichtung zu einer Sendenachricht (350) bei der Kommunikationseinheit gemäß einer relativen Wichtigkeit der Sendenachricht;
Erzeugen einer Signatur (340) bei der Kommunikationseinheit (220) unter Verwendung von sowohl dem wenigstens einen Schlüssel (310), der zu der Kommunikationseinheit (220) gesendet wird als auch der Sendenachricht;
Senden der Signatur (340) zu einem Kommunikationssystem (210), wenn die zugewiesene Gewichtung der Sendenachricht (350) anzeigt, dass die Sendenachricht nicht wichtig ist; und
Senden der Signatur (340) zum Teilnehmeridentifikationsmodul (230), wenn die zugewiesene Gewichtung der Sendenachricht anzeigt, dass die Sendenachricht wichtig ist, worauf das Teilnehmeridentifikationsmodul (230) das Authentifizierungssignal (370) aus dem empfangenen Signatursignal (340) erzeugt und anschließend das Authentifizierungssignal (370) zu einem Kommunikationssystem (210) überträgt.

## Revendications

1. Module d'identification d'abonné (230) pour fournir une authentification locale d'un abonné dans un système de communication (210) comprenant :
une mémoire ; et
**caractérisé en ce qu'**il comprend au moins un élément de traitement agencé pour mettre en oeuvre un jeu d'instructions mémorisé dans la mémoire, le jeu d'instructions étant destiné à :
produire une pluralité de clés (290, 310, 320) en réponse à une demande reçue (240) ;
produire un signal d'authentification (370) sur la base d'un signal reçu (340) et une première clé (320) de la pluralité de clés, le signal reçu (340) étant transmis à partir d'un module de communication (220) couplé pour communiquer avec le module d'identification d'abonné (230), et le signal reçu (340) étant produit par le module de communication (220) en utilisant une seconde clé (310) de la pluralité de clés, la seconde clé (310) ayant été communiquée à partir du module d'identification d'abonné (230) au module de communication (220) ; et
transmettre le signal d'authentification (370) au système de communication (210) par l'intermédiaire du module de communication (220).

2. Module d'identification d'abonné (230) selon la revendication 1, dans lequel le signal d'authentification (370) est produit par une fonction de hachage (330), optionnellement un algorithme de hachage de sécurité, SHA-1, ou par un algorithme de cryptage, par exemple la norme de cryptage de données "Data Encryption Standard, DES".

3. Module d'identification d'abonné (230) selon la revendication 1 ou 2, dans lequel la première clé (320) est une clé secrète, le signal reçu (340) est un message d'autorisation, la seconde clé (310) est une clé de communication et le signal d'authentification (370) est une signature, et dans lequel ledit au moins un élément de traitement comprend :
un élément de génération de clé (250) ; et
un générateur de signature (360) agencé pour recevoir la clé secrète (320) de l'élément de génération de clé (250) et le message d'autorisation (340) à partir du module de communication et agencé en outre pour fournir la signature (370) au module de communication.

4. Module d'identification d'abonné (230) selon la revendication 3, dans lequel l'élément de génération de clé (250) est agencé pour réaliser une transformation cryptographique sur une valeur d'entrée pour produire une pluralité de touches temporaires.

5. Module d'identification d'abonné (230) selon la revendication 4, dans lequel la transformation cryptographique est réalisée en utilisant une clé permanente.

6. Module d'identification d'abonné (230) selon la revendication 3, dans lequel le générateur de signature (360) est agencé pour effectuer une transformation cryptographique sur le message d'autorisation (340) à partir du module de communication en utilisant la clé secrète (320), dans lequel la signature (370) résulte de la transformation cryptographique.

7. Module d'identification d'abonné (230) selon la revendication 3, dans lequel le générateur de clé (250) est agencé pour produire la pluralité de clés à partir d'une valeur reçue et d'une valeur secrète, dans lequel au moins une clé de communication (310) parmi la pluralité de clés est fournie au module de communication (220) et au moins une clé secrète (320) parmi la pluralité de clés n'est pas fournie au module de communication ; et
le générateur de signature (360) est agencé pour produire le signal d'autorisation (370) à partir de ladite au moins une clé secrète (320) et du message d'autorisation (340), le message d'autorisation (340) étant produit par le module de communication (220) en utilisant ladite au moins une clé de communication (310).

8. Module d'identification d'abonné (230) selon la revendication 7, dans lequel le module d'identification d'abonné (230) est agencé pour être inséré dans un module de communication (220).

9. Module d'identification d'abonné (230) selon la revendication 7, dans lequel le générateur de signature (360) est agencé pour produire le signal d'autorisation en utilisant une fonction de hachage, optionnellement un algorithme de hachage de sécurité, SHA-1, ou en utilisant la norme de cryptage de données "Data Encryption Standard, DES".

10. Module d'identification d'abonné (230) selon la revendication 7, dans lequel ladite au moins une clé de communication comprend une clé d'intégrité (310).

11. Procédé pour fournir une authentification à un abonné en utilisant un module d'identification d'abonné (230), **caractérisé par** les étapes suivantes :
produire dans le module d'identification d'abonné (230) une pluralité de clés (290, 310, 320) ;
produire dans le module d'identification d'abonné (230) un signal d'authentification (370) en fonction d'un signal reçu (340) et d'une première clé (320) parmi la pluralité de clés, le signal reçu (340) étant transmis à partir d'un module de communication (220) couplé pour communiquer avec le module d'identification d'abonné (230), et le signal reçu étant produit par le module de communication (220) en utilisant une seconde clé (310) parmi la pluralité de clés, la seconde clé (310) ayant été communiquée à partir du module d'identification d'abonné (230) au module de communication (220) ; et
transmettre le signal d'authentification (370) à un système de communication (210) par l'intermédiaire du module de communication (220).

12. Procédé selon la revendication 11, dans lequel la génération du signal de signature est réalisée en utilisant une opération non réversible ou en utilisant une norme de cryptage de données (Data Encryption Standard, DES), ou en utilisant une fonction de hachage, optionnellement l'algorithme de hachage de sécurité SHA-1.

13. Procédé selon la revendication 11 ou 12, comprenant :
transmettre au moins une clé (310) parmi la pluralité de clés à un module de communication (220) couplé pour communiquer avec le module d'identification d'abonné (230) et stockant de façon privée au moins une clé (320) parmi la pluralité de clés ;
affecter un poids au message de transmission (350) au niveau du module de communication en accord avec l'importance relative du message de transmission ;
produire une signature (340) au niveau du module de communication (220) en utilisant ladite au moins une clé (310) émise vers le module de communication (220) et le message de transmission ;
transmettre la signature (340) à un système de communication (210) si le poids affecté au message de transmission (350) indique que le message de transmission n'est pas important ; et
transmettre la signature (340) au module d'identification d'abonné (230) si le poids affecté au message de transmission indique que le message de transmission est important, d'où il résulte que le module d'identification d'abonné (230) produit le signal d'authentification (370) à partir du signal de signature reçu (340) puis transfère le signal d'authentification (370) à un système de communication (210).
